# EUROPEAN PATENT APPLICATION

(11) **EP 4 621 680 A1**
(43) Date of publication of application: **24.09.2025**
(21) Application number: 25161975.5
(22) Date of filing: 06.03.2025
(51) Int. Cl.: G06Q 10/08, G06Q 10/087

(54) **INFORMATION PROCESSING SYSTEM, INFORMATION PROCESSING METHOD, AND CARRIER MEDIUM**

(30) Priority: 21.03.2024 JP 2024045006
(71) Applicant: Ricoh Company, Ltd., Tokyo 143-8555 (JP)
(72) Inventor: WATANABE, Shota, Tokyo, 143-8555 (JP); OKAMOTO, Toshihiro, Tokyo, 143-8555 (JP); KAKINUMA, Akihiro, Tokyo, 143-8555 (JP)
(74) Representative: SSM Sandmair

(57) **Abstract**

An information processing system that manages packages includes a terminal device (120) and a server (110). The terminal device (120) includes a reading unit (322) to read, with a reader (280), a first code including first identification information identifying a package and a second code including second identification information identifying a position of the package; an extraction unit (323) to extract the first identification information and the second identification information from the first code and the second code, respectively; and a communication unit (311) to transmit the first identification information and the second identification information extracted by the extraction unit (323) to the server (110). The server (110) includes a first management unit (314) configured to manage, in a storage device (240), information on the package identified by the first identification information and information on the position identified by the second identification information in association with each other based on the first identification information and the second identification information.

## Description

### BACKGROUND

### Technical Field

The present disclosure relates to an information processing system, an information processing method, and a carrier medium to control packages.

### Related Art

In logistics, technologies for efficiently managing packages are being developed.

For example, Japanese Patent No. 6957076 discloses a technique for controlling a package by reading a two-dimensional code attached to the package and associating the package with the logistics facility where the package is placed. This technique allows the information on a package handled in a logistics facility to be flexibly set.

However, in Japanese Patent No. 6957076, to associate a package with the logistics facility where the package is placed, a user needs to search for and select an identifier (ID) of the logistics facility from a list of IDs each identifying a logistics facility on a terminal device (information processing terminal), and input the ID to the terminal device. Each time the user moves the package to a storage position in the logistics facility, the user needs to input, to the terminal device, the ID of the storage position in the logistics facility, which increases the burden on the user. A technique for reducing the time and effort of the user in controlling the package has been desired.

### SUMMARY

The present disclosure described herein provides an information processing system that manages packages and includes a terminal device and a server. The terminal device includes a reading unit to read, with a reader, a first code including first identification information identifying a package and a second code including second identification information identifying a position of the package; an extraction unit to extract the first identification information and the second identification information from the first code and the second code, respectively; and a communication unit to transmit the first identification information and the second identification information extracted by the extraction unit to the server. The server includes a first management unit to manage, in a storage device, information on the package identified by the first identification information and information on the position identified by the second identification information in association with each other based on the first identification information and the second identification information.

The present disclosure described herein provides a method for managing packages. The method includes reading, with a reader, a first code including first identification information identifying a package and a second code including second identification information identifying a position of the package; extracting the first identification information and the second identification information from the first code and the second code, respectively; and managing, in a storage device, information on the package identified by the first identification information and information on the position identified by the second identification information in association with each other based on the first identification information and the second identification information.

The present disclosure described herein provides a carrier medium carrying computer readable codes which, when executed by a computer system, cause the computer system to carry out the method described above.

According to one aspect of the present disclosure, the efficiency of the management of packages increases.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating a hardware configuration of an information processing system according to one embodiment of the present disclosure;
FIG. 2A is a block diagram of a hardware configuration of a server of the information processing system illustrated in FIG. 1;
FIG. 2B is a block diagram of a hardware configuration of a terminal device of the information processing system illustrated in FIG. 1;
FIG. 3 is a schematic block diagram illustrating a software configuration of the information processing system illustrated in FIG. 1;
FIG. 4A is a diagram illustrating a screen for registering a position in the information processing system illustrated in FIG. 1;
FIG. 4B is a diagram illustrating a map screen in the information processing system illustrated in FIG. 1;
FIG. 5 is a flowchart of a process of package management based on a package code and a position code, performed by the information processing system illustrated in FIG. 1;
FIGS. 6A and 6B are diagrams each illustrating a display screen when a code is read, displayed by the information processing system illustrated in FIG. 1;
FIG. 7 is a diagram illustrating a display screen when packages are combined, displayed by the information processing system illustrated in FIG. 1;
FIG. 8 is another diagram illustrating a package information confirmation screen displayed by the information processing system illustrated in FIG. 1;
FIG. 9 is a package information confirmation screen displayed by the information processing system illustrated in FIG. 1;
FIG. 10 is a flowchart illustrating a package management process based on a package code, a position code, and a handling unit code, performed by the information processing system illustrated in FIG. 1;
FIG. 11 is another flowchart illustrating the package management process based on a package code, a position code, and a handling unit code, performed by the information processing system illustrated in FIG. 1;
FIGS. 12A and 12B are diagrams each illustrating a read result list screen in the process illustrated in FIG. 10;
FIGS. 13A to 13C are diagrams each illustrating data transmitted in the process illustrated in FIG. 10;
FIG. 14 is a diagram illustrating a package information confirmation screen displayed by the information processing system illustrated in FIG. 1; and
FIGS. 15A and 15B are diagrams each illustrating a screen for moving a package between handling units, displayed by the information processing system illustrated in FIG. 1.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise. In the drawings referred to below, the same or similar reference codes are used for the common or corresponding elements, and redundant descriptions are omitted as appropriate.

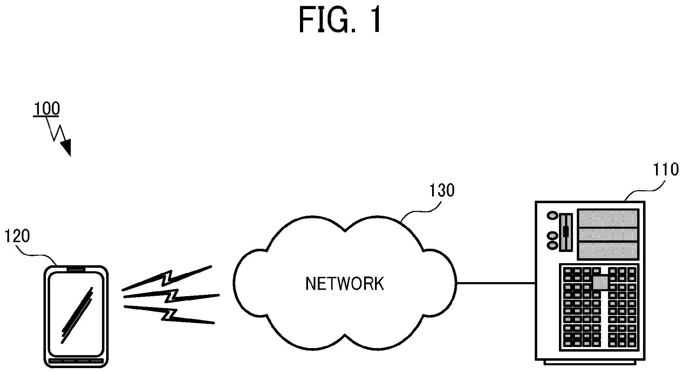

FIG. 1 is a schematic diagram illustrating a hardware configuration of an information processing system 100. FIG. 1 illustrates an environment in which a server 110 and a terminal device 120 are connected via a network 130 such as the Internet or a local area network (LAN). The number of servers and the number of terminal devices included in the information processing system 100 are not limited to those illustrated in FIG. 1. The server 110 and the terminal device 120 are connected to the network 130 either via a wired connection or a wireless connection.

The server 110 is an information processing apparatus that provides services in the present embodiment. The server 110 is used to manage packages at a logistics facility. The server 110 is, for example, a server computer or a personal computer.

In the present embodiment, the terminal device 120 is an information processing apparatus that reads various codes and transmits the read results to the server 110. The terminal device 120 reads, for example, a two-dimensional code attached to a package and identifying the package, a two-dimensional code identifying the position where the package is placed, and a two-dimensional code identifying a container, a pallet, or the like (hereinafter, referred to as a "handling unit" in some cases) that collectively accommodates the packages. In the description below, the terminal device 120 reads a two-dimensional code such as a quick response (QR) CODE, but the code is not particularly limited thereto. The code read by the terminal device 120 is not limited to a two-dimensional code but may be a one-dimensional code such as a barcode. The terminal device 120 may be, for example, a smartphone or a tablet terminal, or may be a reading device such as a handy reader. Alternatively, the terminal device 120 may be a personal computer including a code reader. When the terminal device 120 is a device like a handy reader, various codes can be read by pressing, for example, a physical button. This obviates touching the screen and enables the user to manage the package with a simple operation, for example, even when the user wears gloves or hands are dirty.

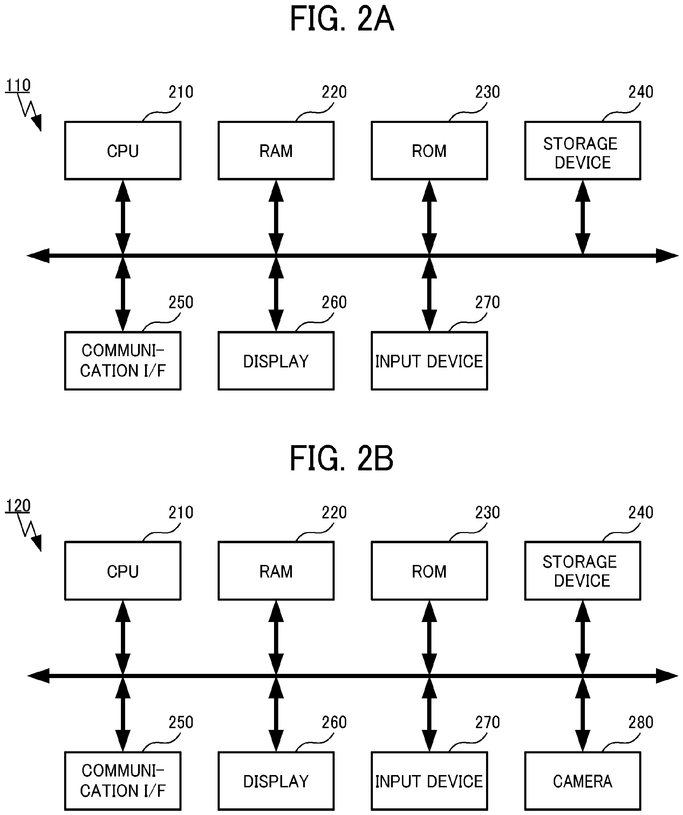

The hardware configurations of the apparatus and device included in the information processing system 100 are described below. FIG. 2A illustrates a hardware configuration of the server 110. FIG. 2B illustrates a hardware configuration of the terminal device 120.

The hardware configuration of the server 110 is described with reference to FIG. 2A. The server 110 includes a central processing unit (CPU) 210, a random-access memory (RAM) 220, a read-only memory (ROM) 230, a storage device 240, a communication interface (I/F) 250, a display 260, and an input device 270 that are connected to each other through a bus.

The CPU 210 executes programs for controlling the operation of the server 110 and performs predetermined processing. The RAM 220 is a volatile memory that provides a work area of a program executed by the CPU 210 and is used to store and load programs and data. The ROM 230 is a non-volatile memory to store data such as programs and firmware executed by the CPU 210.

The storage device 240 is a readable and writable non-volatile storage device (a non-volatile memory) that stores, for example, an operating system (OS) for the server 110 to function, various application programs, setting information, and various data. Examples of the storage device 240 include a hard disk drive (HDD) and a solid-state drive (SSD).

The communication I/F 250 connects the server 110 to the network 130 and allows the server 110 to communicate with other apparatuses via the network 130. Communications via the network 130 may be either wired communications or wireless communications, and various kinds of data can be transmitted and received using a predetermined communication protocol such as a transmission control protocol/internet protocol (TCP/IP).

The display 260 is, for example, a liquid crystal display (LCD) and displays, for example, various data and the state of the server 110 to the user.

The input device 270 is, for example, a keyboard or a mouse and allows the user to operate the server 110. The display 260 and the input device 270 may be separate devices or an integral device such as a touch screen display having both functions. The server 110 may not include the display 260 and the input device 270.

The hardware configuration of the terminal device 120 is described below with reference to FIG. 2B.

The terminal device 120 includes a CPU 210, a RAM 220, a ROM 230, a storage device 240, a communication I/F 250, a display 260, an input device 270, and a camera 280 that are connected to each other through a bus. The CPU 210, the RAM 220, the ROM 230, the storage device 240, the communication I/F 250, the display 260, and the input device 270 are similar to those of the server 110 described above, and a detailed description thereof is omitted.

The camera 280 serves as a reader to read two-dimensional codes. The camera 280 captures and reads an image of, for example, a two-dimensional code attached to a package, a two-dimensional code identifying the place where a package is stored, or a two-dimensional code identifying a container, a pallet, or the like. The reader is not limited to the camera 280 but may be a scanner such as a barcode reader or a two-dimensional code reader.

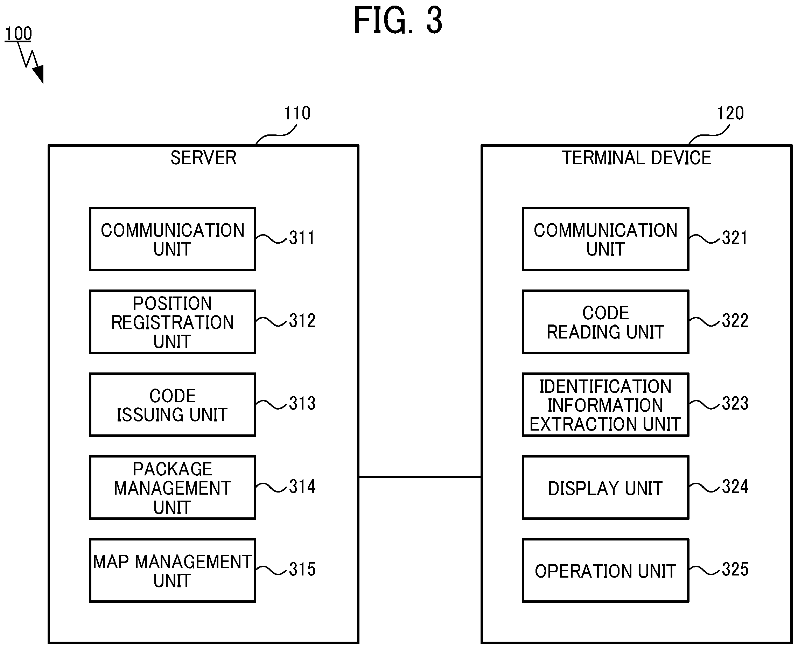

FIG. 3 is a block diagram illustrating a software configuration of the information processing system 100. As illustrated in FIG. 3, the server 110 includes, as functional units, a communication unit 311, a position registration unit 312, a code issuing unit 313, a package management unit 314, and a map management unit 315. The terminal device 120 includes, as functional units, a communication unit 321, a code reading unit 322, an identification information extraction unit 323, a display unit 324, and an operation unit 325. The functional units are described in detail below.

The functional units of the server 110 are described below. The communication unit 311 controls the operation of the communication I/F 250 and performs communication via the network 130. The communication unit 311 serves as a communication means. The communication unit 311 receives, for example, information on various codes read by the terminal device 120.

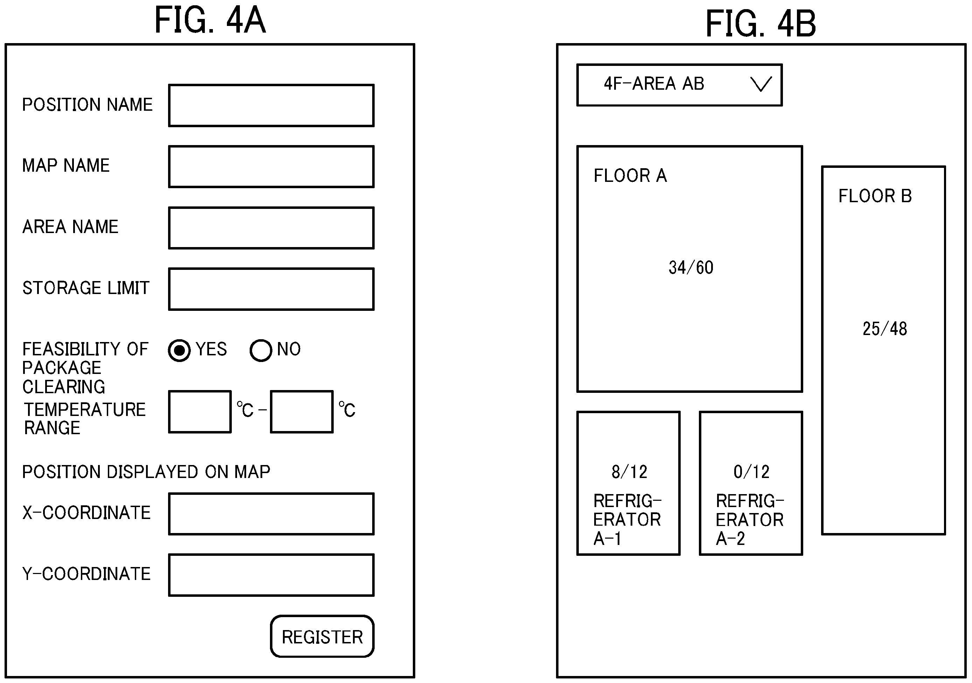

The position registration unit 312 serves as a registration means that registers a position at which a package is stored or handled and serves as a registration means. The position registration unit 312 registers the position information by, for example, through the screen illustrated in FIGS. 4A and 4B. FIG. 4A is a diagram illustrating a screen for registering a position. FIG. 4B is a diagram illustrating a map screen.

As illustrated in FIG. 4A, the information on the position where the package is stored or handled may include a position name, a map name, an area name, the upper limit of the number of packages stored in the area, the feasibility of package clearing in the area, the temperature range in the area, and the coordinates of the area on the map.

The position name may be, for example, the name of a facility where the package is stored or handled, such as "XX warehouse" or "XX factory." The map name may be a name indicating a map of the facility. The area may be an area for storing or handling packages in the facility, and the area name may be, for example, the floor number or the room name in the facility. The term "clearing" refers to the process of deleting the package from management data when the management thereof is no longer necessary. This occurs, for example, when multiple packages (or components) are combined or when the package is shipped. For example, an area where an assembling is performed or an area where shipping is performed can be set as the area where the clearing is feasible.

The description continues with reference to FIG. 3. The code issuing unit 313 serves as an issuing means that issues various codes. The code issuing unit 313 issues, for example, a code including identification information that identifies the position at which the package is stored or handled. This identification information is registered by the position registration unit 312. The code issuing unit 313 can issue a code including identification information identifying a handling unit such as a container or a pallet that collectively stores multiple packages. The code including the identification information identifying the package may be a code attached to the package in advance or a code issued by the code issuing unit 313. For example, the manufacturer of the product may attach a barcode to the package in advance. When issuing the code, the code issuing unit 313 can include, in the code, an identifier being an attribute indicating whether the subject is a package, a position, or a handling unit. This eliminates the need for the user to select the attribute of the subject when reading the code and thus reduces the user's time and effort. The code issued by the code issuing unit 313 is output by, for example, a printer, and can be attached to a package or a handling unit to be managed or can be placed in an area where the package is placed.

The package management unit 314 manages (e.g., stores, updates, and deletes) information extracted from the codes read by the terminal device 120 in a database. The package management unit 314 serves as a first management means. The package management unit 314 controls the operation of the storage device 240 to manage, for example, a database in which the information on a package is associated with the information on the position of the package. The package management unit 314 further manages a database in which the information on a package, the information on the position of the package, and the information on a handling unit accommodating the package are associated with each other.

The map management unit 315 manages information on the maps of places where packages are managed and serves as a second management means. The map management unit 315 manages a map screen as illustrated in FIG. 4B. Specifically, the server 110 includes a database storing a map image (floor plan) of each facility where packages are stored and handled. The map management unit 315 generates information related to the map screen of FIG. 4B from the information on the package input by the user on the screen of FIG. 4A and the map image (sketch) stored in advance. The map screen displays the upper limit of the number of packages in each area and the number of packages currently placed in each area, together with a diagram illustrating the positional relationship between the areas, for example, as illustrated in FIG. 4B. FIG. 4B illustrates that 34 packages are placed in an "area A" in which the upper limit of the number of packages is 60. The number "34" of currently stored packages is indicated based on the database in which the information on the package, the position, and the handling unit are associated with each other.

The map screen illustrated in FIG. 4B is an example and does not limit the embodiments of the present disclosure.

The map screen may display various structures such as walls and doors.

The map screen allows the selection of a location from a drop-down list to display another map.

Returning to FIG. 3, the functional units of the terminal device 120 will be described. The communication unit 321 controls the operation of the communication I/F 250 to perform communication via the network 130. The communication unit 311 serves as a communication means. The communication unit 311 transmits, for example, various kinds of information extracted from the code read by the terminal device 120 to the server 110. The communication unit 311 receives various kinds of information such as information on the package, the position, and the handling unit from the server 110.

The code reading unit 322 controls the operation of the camera 280 to read a code attached to, for example, a package, a position where a package is placed, and a handling unit. The code reading unit 322 serves as a reading means. The code reading unit 322 reads a package code (first code) including identification information (first identification information) identifying the package, a position code (second code) including identification information (second identification information) identifying the position of a package, and a handling unit code (third code) including identification information (third identification information) identifying the handling unit.

The identification information extraction unit 323 serves as an extraction means and analyzes the code read by the code reading unit 322 to extract various identification information from the code. The identification information extraction unit 323 extracts first identification information identifying a package and second identification information identifying the position of the package from a first code and a second code, respectively. The identification information extracted by the identification information extraction unit 323 is transmitted to the server 110, and thus the package management unit 314 can manage information such as the position of the package and the position of the handling unit accommodating the package.

The display unit 324 controls the operation of the display 260 to display various types of screens (screen images). The display unit 324 serves as a display means. The display unit 324 displays, for example, a list screen and a map screen. The list screen is for managing, for example, the information on the package, the position, and the handling unit identified by the identification information extracted from the read code; and the position of the package.

The operation unit 325 serves as an operation means for controlling the terminal device 120 according to an operation by a user input via the input device 270. For example, the operation unit 325 activates the camera 280, executes a code reading operation, transitions a display screen, and executes the operation for the display screen.

The above-described functional units correspond to functional means implemented by the CPU 210 executing programs to function hardware elements. All the functional units described in the embodiments may be implemented by software. Alternatively, a part of or all the functional units may be implemented by hardware each of which provides the equivalent function.

Further, it is not necessary that all the above-described functional units are included in the configuration as illustrated in FIG. 3. For example, in another embodiment, each functional unit may be implemented by the server 110 and the terminal device 120 that operate in cooperation. The identification information extraction unit 323 may be included in the server 110. In this case, the code reading unit 322 transmits the read code to the server 110 via the communication unit 321, and the identification information extraction unit 323 analyzes the code to extract the identification information therefrom. Alternatively, the above-described functional units may be included only in the terminal device 120 such that their functions are provided by the operation of the terminal device 120. In this case, the terminal device 120 can independently execute each function without depending on the server 110.

The processing executed by the functional units is described below. In the following, two examples are described. In a first example, the package management is performed based on the package code and the position code. In a second example, the package management is performed based on the package code, the position code, and the handling unit code.

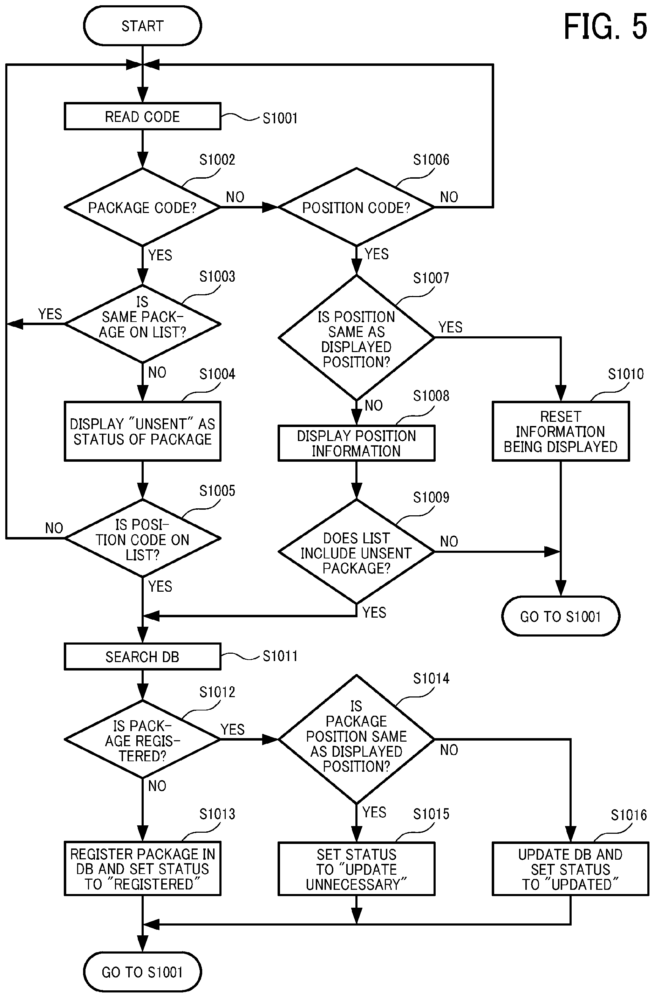

The first example will be described. FIG. 5 is a flowchart of the process of the first example.

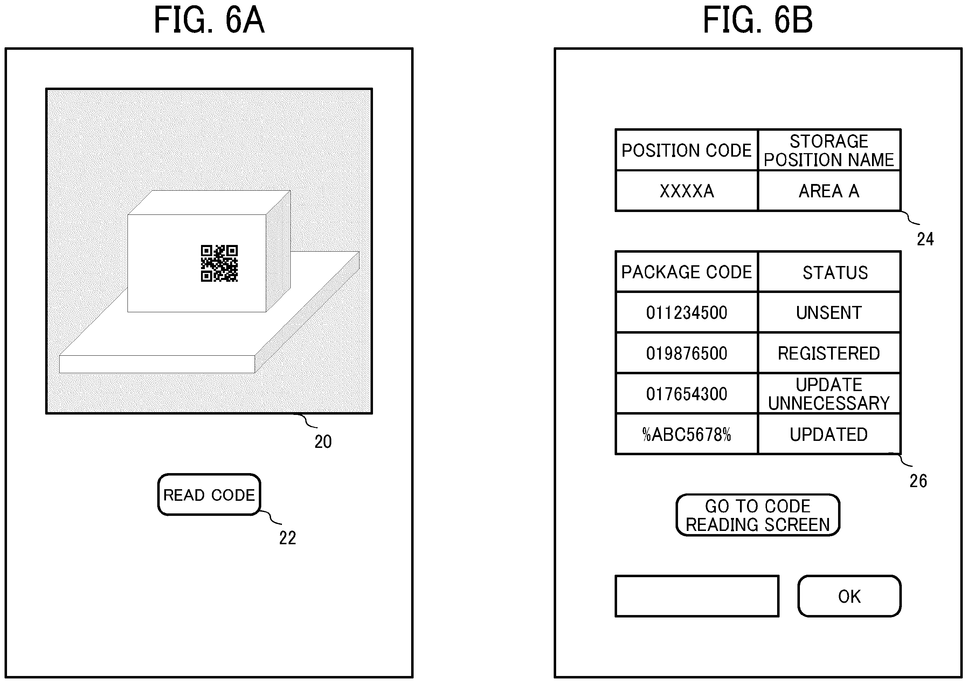

In step S1001, the code reading unit 322 reads a code attached to the package or a code located at a position where the package is placed. A screen on which reading the code is executed is described with reference to FIGS. 6A and 6B. FIGS. 6A and 6B are diagrams each illustrating a display screen in the present embodiment.

FIG. 6A is a diagram illustrating a screen for reading a code, which is displayed on the display 260 of the terminal device 120. As illustrated in FIG. 6A, the display 260 displays an image 20 captured by the camera 280 and a read code button 22. In the example of FIG. 6A, the code attached to the package is read. The code reading unit 322 reads the code when the user presses the read code button 22. In another embodiment, the display screen may not include the read code button 22. For example, the code reading unit 322 may read the code when the camera 280 captures the image 20 including the code.

The description continues with reference to FIG. 5. In step S1002, the process is branched depending on whether the read code is a package code. In step S1002, the branching may be performed by the identification information extraction unit 323 determining whether the code is a package code based on the identifier included in the read code. When the code is a package code (YES), the process proceeds to step S1003. When the code is not a package code (NO), the process proceeds to step S1006.

In step S1003, the process branches depending on whether the same package as the package corresponding to the read code is present on a read result list screen. FIG. 6B illustrates an example of the read result list screen. As illustrated in FIG. 6B, the read result list screen displays a field 24 in which the code of a position is associated with the name of the position, and a table 26 in which the package code of each package is associated with the status of the package. In the screen illustrated in FIG. 6B, the status of the package with the package code "011234500" is "unsent," the status of the package with the package code "019876500" is "registered," the status of the package with the package code "017654300" is "update unnecessary," and the status of the package with the package code "%ABC5678%" is "updated." When the package code read in step S1002 is on the list screen (YES), the package corresponding to the package code has already been read. Then, there is no need to perform management-related processing, and the process returns to step S1001. By contrast, when the package code read in step S1002 is not on the list screen (NO), the process proceeds to step S1004 to manage the package.

In step S1004, the status of the read package is displayed as "unsent" on the read result list screen. For example, when the read package code is not in the list as in "011234500" of FIG. 6B, the code is added to the read result list screen together with the status "unsent."

In step S1005, the process branches depending on whether the position code is on the read result list screen. When the position code is not on the list (NO), the process returns to step S1001 to again read the code, and the above process is repeated. When the position code is on the list (YES), the process proceeds to step S1011.

When the read code is not a package code (NO) in the branch of step S1002, the process proceeds to step S1006, and the process branches depending on whether the read code is a position code. In step S1006, the branching may be performed by the identification information extraction unit 323 determining whether the code is a position code based on the identifier included in the read code. When the read code is not the package code (NO), the read code is neither the package code nor the position code, and thus the process returns to step S1001. In this case, a display for confirming whether the read code is appropriate may be performed. By contrast, when the read code is a position code (YES), the process proceeds to step S1007.

In step S1007, the process branches depending on whether the read position code is the same as that of the position displayed on the read result list screen. For example, when the read position code is "XXXXA" in FIG. 6B, the read position code is the same as that of the position displayed on the read result list screen (YES), and thus the process proceeds to step S1010. In step S1010, the information (package code and position code) displayed on the read result list screen is deleted and reset. Deleting and resetting the information displayed on the read result list screen in this way has advantages. For example, when the user wants to reset the displayed information, the reset can be achieved by a simple operation of reading the position code twice. Thus, the time and effort of the user can be reduced. Then, the process returns to step S1001 to again read the code, and the above process is repeated. The processing in step S1010 may be optional.

In step S1007, for example, when the position code is not input or when the read position code is different from "XXXXA" in the screen example of FIG. 6B, the read position code is not the same as that of the position displayed on the read result list screen (NO). Thus, the process proceeds to step S1008. In step S1008, the terminal device 120 obtains the position information corresponding to the read position code from the server 110 and displays the position information on the read result list screen.

In step S1009, the process branches depending on whether the read result list screen includes a package whose status is "unsent." When the list includes no unsent package (NO), the process returns to step S1001 to read the code again, and the above process is repeated. By contrast, when the list includes an unsent package (YES), the process proceeds to step S1011.

When the position code is on the list in step S1005 (YES) or the list includes an unsent package in step S1009 (YES), the process proceeds to step S1011. In step S1011, the database managed by the package management unit 314 of the server 110 is searched for the package whose status is "unsent" on the read result list screen. That is, whether that package is registered in the database is checked.

In step S1012, when the package is not registered in the database (NO), the process proceeds to step S1013. In step S1013, the package management unit 314 registers in the database the package code that is unsent (not yet shipped) and sets the status displayed on the read result list screen to "registered." By the operation of step S1013, the status of the package on the read result list screen is changed to, for example, that of the package code "019876500" in FIG. 6B. The registration of the package in the database in step S1013 is achieved by associating the package code with the position code. In the database, various kinds of information for managing the package, such as the date and time of the registration and the worker who performs the registration, may be associated. Then, the process returns to step S1001 to again read the code, and the above process is repeated.

In step S1012, when the package is registered in the database (YES), the process proceeds to step S1014. In step S1014, the process branches depending on whether the position of the package registered in the database is the same as the current position, that is, the position displayed on the read result list screen. When the positions are the same (YES), the process proceeds to step S1015. In this case, since the package whose code has been read is already registered in the database as being at the current position, the status of the read result list screen is set to "update unnecessary" in step S1015. By the operation of step S1014, the status of the package on the read result list screen is changed to, for example, that of the package code "017654300" in FIG. 6B.

At this time, the database does not need to be updated. Then, the process returns to step S1001 to again read the code, and the above process is repeated.

When the positions are not the same in step S1014 (NO), the process proceeds to step S1016. In step S1016, the package management unit 314 updates the position associated with the package code in the database to the current position and sets the status displayed on the read result list screen to "updated." By the operation of step S1016, the read result list screen is changed to, for example, the package code "% ABC5678%" in FIG. 6B. Then, the process returns to step S1001 to again read the code, and the above process is repeated.

The information processing system 100 manages the position of the package by the process of FIG. 5. In the process of FIG. 5, the position of the package is registered and managed. Alternatively, the process of FIG. 5 may be adapted to manufacturing process management in which multiple packages (for example, components) are combined to be collectively handled.

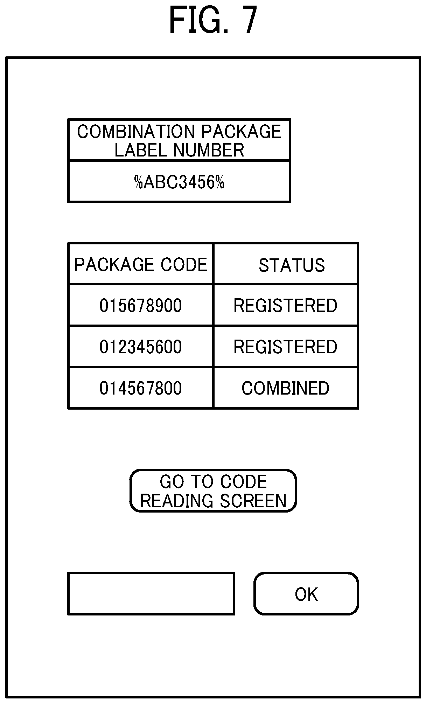

In such a case, for example, a screen as illustrated in FIG. 7 is displayed. FIG. 7 is a diagram illustrating another display screen in the present embodiment. On the screen illustrated in FIG. 7, the statuses of the package (component) that can be registered include a status such as "combined" in addition to "registered" and the like. For example, when a component (child package) is combined with a certain package (parent package), the package management unit 314 associates the information on the child package with the information on the parent package, thereby adding the information on the parent package to the information on the child package. Then, the child package is also managed by reading the package code of the parent package. This enables, for example, the management of the positions of multiple components by reading only one package code.

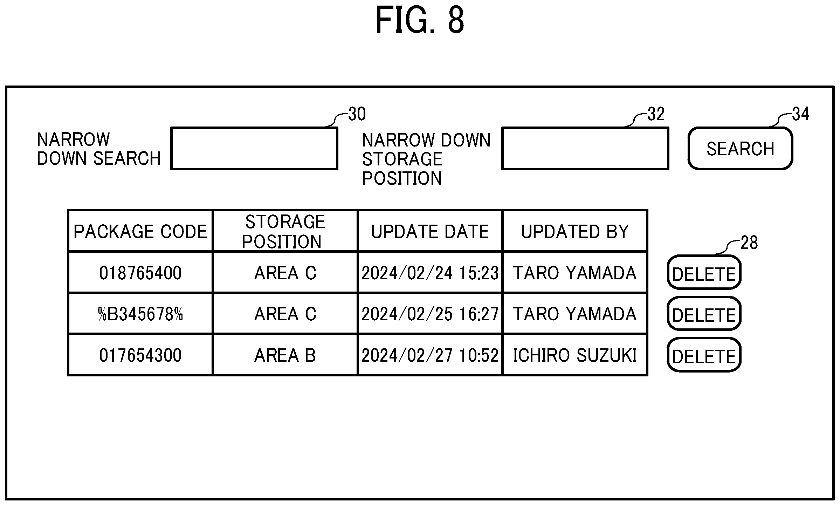

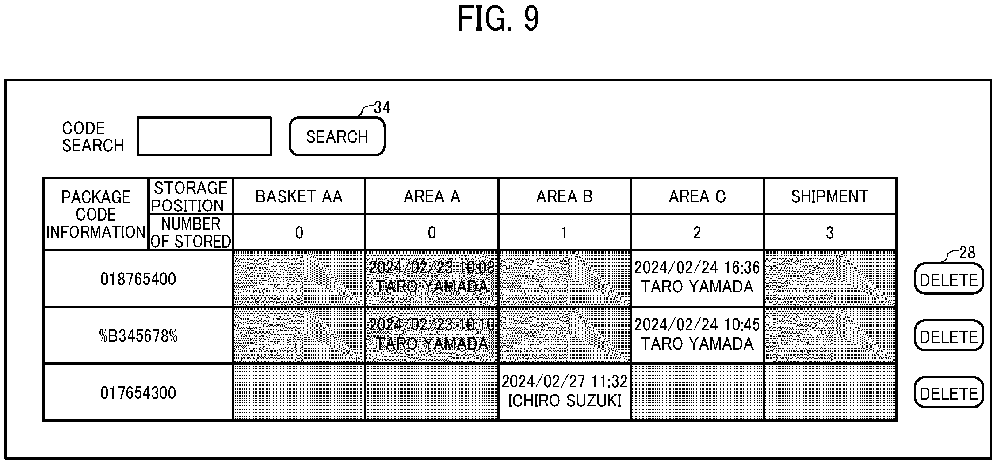

A screen for checking the status of a package will be described with reference to FIGS. 8 and 9.

FIGS. 8 and 9 are diagrams each illustrating a package information confirmation screen.

The package information confirmation screen can display a table in which a package code, the position at which the package is currently stored, the update date and time, and the person who updated are associated with each other, for example, as illustrated in FIG. 8. When the storage position is a position where clearing is feasible, a "delete" button 28 is displayed. The "delete" button 28 may be displayed only for a person having specific permission. As illustrated in FIG. 8, the package information confirmation screen may include search keyword fields 30 and 32, and a search button 34 to filter the search with, for example, the package or the storage position to narrow down the displayed information. When the package information is deleted, the information can be registered in the package management unit 314. This allows the user to check the movement of the package as a history.

The package information confirmation screen may allow the user to grasp the history of the positions where the package is stored, for example, as illustrated in FIG. 9. In FIG. 9, it is indicated that the package with the package code "018765400" is in the area A at 10:08 on February 23, 2024, and in the area C at 16:36 on February 24, 2024. Graying out the information other than the latest information on the position of the package facilitates easy grasping of the current position of the package. As illustrated in FIG. 9, the number of packages stored at each position may be displayed on the package information confirmation screen. The package information confirmation screen illustrated in FIG. 9 may include the "delete" button 28 and the search button 34 to enable operations such as search and deletion as in FIG. 8.

In the package management, a map screen as illustrated in FIG. 4B may be displayed in addition to the package information confirmation screen as illustrated in FIGS. 8 and 9. This facilitates grasping the position where the package is placed.

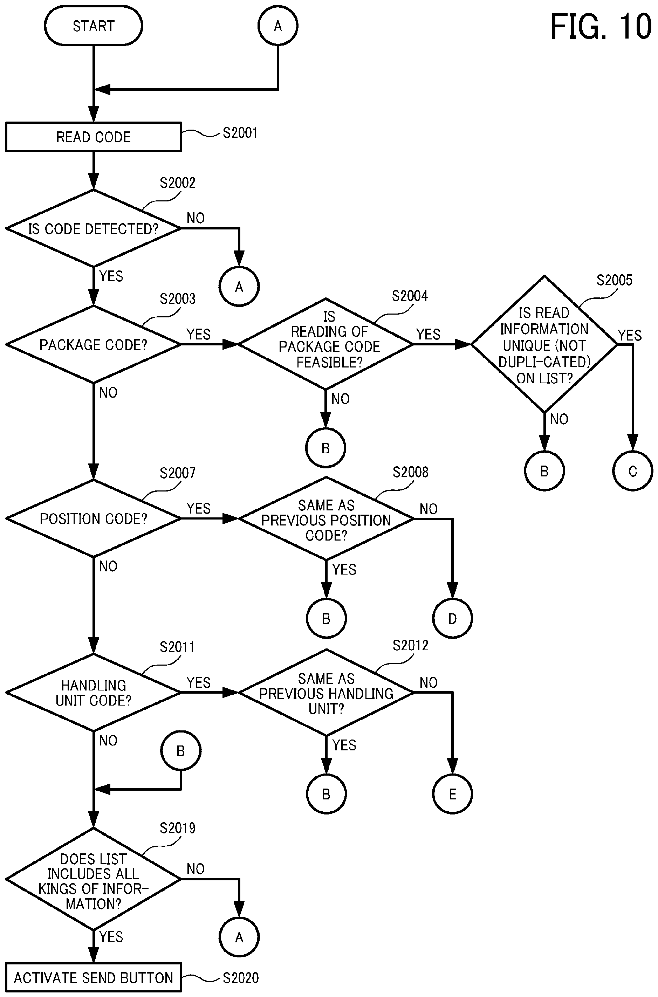

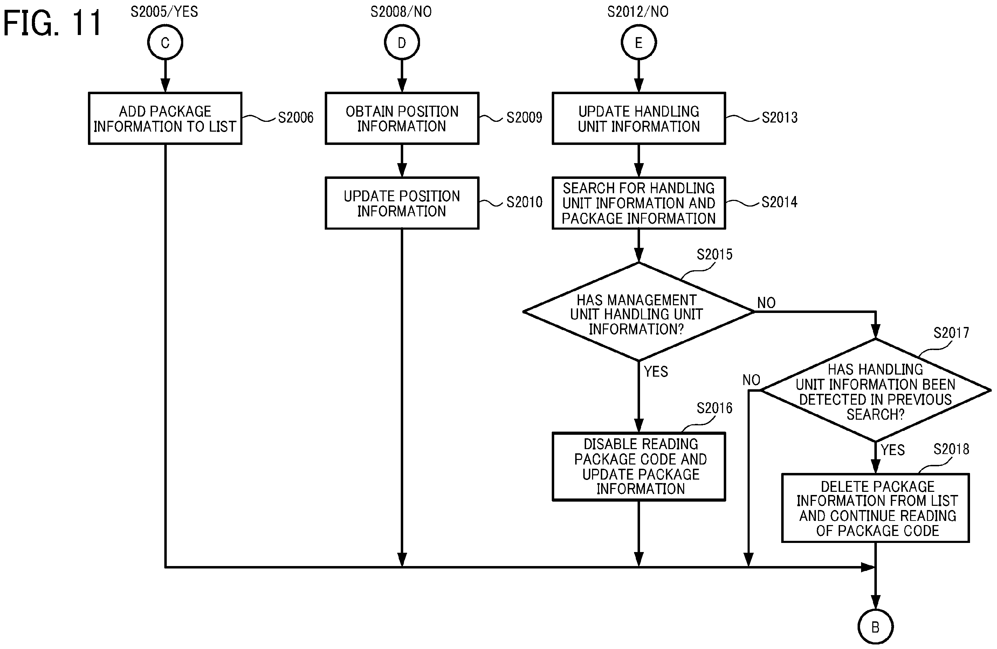

The process of package management based on the package code, the position code, and the handling unit code in the second example will be described with reference to FIGS. 10 and 11. FIGS. 10 and 11 are flowcharts of the process of the package management in the second example.

In step S2001, the code reading unit 322 reads the code attached to the package, the position where the package is placed, or the handling unit. The operation in S2001 is similar to that in S1001 of FIG. 5.

In step S2002, the process is branched depending on whether a code is detected. When the code is not detected (NO), the process returns to step S2001. When the code is detected (YES), the process proceeds to step S2003.

In step S2003, the process branches depending on whether the detected code is a package code. When the code is not a package code (NO), the process proceeds to step S2007. When the code is a package code (YES), the process proceeds to step S2004.

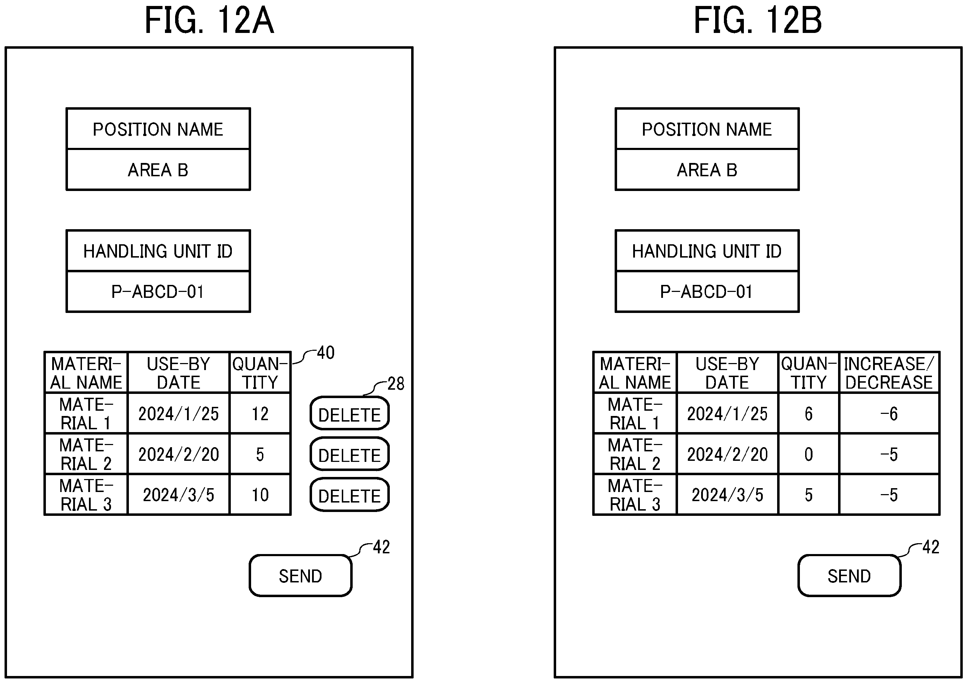

In step S2004, the process branches depending on whether the reading of the package code is feasible or disabled. The disabling of package code reading will be described in step S2016. A read result list screen in the second example will be described with reference to FIG. 12. FIGS. 12A and 12B are diagrams each illustrating a read result list screen in the second example.

In the second example, the read result list screen may be configured as illustrated in FIG. 12A. The read result list screen illustrated in FIG. 12A indicates a position name, a handling unit ID, and package names (names of materials for manufacturing). The position name can be input by reading a code including identification information identifying the position where the package or the handling unit is placed. The handling unit ID can be input by reading a code attached to the handling unit. The package name can be input by reading a code attached to the package. The packages illustrated in FIG. 12A are materials for manufacturing, and various kinds of information on the materials can be displayed. For example, by reading a code attached to the package containing the material, the material name, the use-by date of the material, and the quantity are displayed in association with each other as illustrated in FIG. 12A. When the storage position is a position where clearing is feasible, the "delete" button 28 is displayed on the read result list screen similar to FIG. 8. The "delete" button 28 may be displayed only for a person having specific permission. When the package information is deleted, the information can be registered in the package management unit 314. This allows the user to check the movement of the package as a history.

The description continues with reference to FIGS. 10 and 11. In step S2004, when package code reading is disabled (NO), the process proceeds to step S2019 (step S2019 will be described later). By contrast, in step S2004, when the reading of the package code is feasible (YES), the process proceeds to step S2005.

In step S2005, the process branches depending on whether the package corresponding to the read code is unique (not duplicated) on the read result list screen. When there is a duplication (NO), the process proceeds to step S2019 (step S2019 will be described later). When there is no duplication (YES), the process proceeds to step S2006 in FIG. 11. In step S2005, it is determined whether all the items (e.g., material and use-by date in the case of FIG. 12A) set on the read result list screen match among the multiple packages. The package management unit 314 determines that the packages are to be collectively managed when all the items set on the list screen match, and determines that the packages are different and to be separately managed when not. The term "collectively manages" includes registering the total weight of multiple packages as described later and determining whether the items set on the read result list screen match among the multiple packages as described above. When it is determined that the packages are to be collectively managed, the quantity in FIG. 12A automatically increases. In the case where determination is made only based on the items set on the read result list screen, the information of one package is applied to the other packages. The read result list screen allows the user to change the item for determining whether to collectively manage multiple packages.

In step S2006, the package information corresponding to the read package code is added to the read result list screen. Then, the process proceeds to step S2019 of FIG. 10 (step S2019 will be described later).

In step S2003 of FIG. 10, when the detected code is not a package code (NO), the process proceeds to step S2007. In step S2007, the process branches depending on whether the detected code is a position code. When the code is not a position code (NO), the process proceeds to step S2011. When the code is a position code (YES), the process proceeds to step S2008.

In step S2008, the process branches depending on whether the detected position code is the same as the position code detected previously. When the position code is the same as the previous position code (YES), the process proceeds to step S2019 (step S2019 will be described later). When the position code is not the same as the previous position code (NO), the process proceeds to step S2009 in FIG. 11.

In step S2009, the package management unit 314 obtains various information registered by the position registration unit 312 corresponding to the read position code. In step S2010, the package management unit 314 updates the position name displayed on the read result list screen to the position name corresponding to the read position code. Then, the process proceeds to step S2019 of FIG. 10 (step S2019 will be described later).

In step S2007 of FIG. 10, when the detected code is not a position code, the process proceeds to step S2011. In step S2011, the process is branched depending on whether the detected code is the handling unit code. When the code is not the handling unit code (NO), the process proceeds to step S2019 (step S2019 will be described later). In this case, since the detected code is neither the package code, the position code, nor the handling unit code, a display for confirming whether the read code is appropriate may be performed. When the code is the handling unit code (YES), the process proceeds to step S2012.

In step S2012, the process is branched depending on whether the detected handling unit code is the same as the handling unit code detected previously. When the position code is the same as the previous position code (YES), the process proceeds to step S2019 (step S2019 will be described later). When the position code is not the same as the previous position code (NO), the process proceeds to step S2013 in FIG. 11.

In step S2013, the package management unit 314 updates the information on the handling unit displayed on the read result list screen to the information corresponding to the read handling unit code. In step S2014, the package management unit 314 searches the database for the handling unit information and the package information related to the handling unit code. The handling unit information and the package information related to the handling unit code are, for example, information on the handling unit and the package accommodated in the handling unit, and may be registered in advance.

In step S2015, the processing is branched depending on whether the package management unit 314 has detected the handling unit information in the search in step S2014. When the package management unit 314 has detected the handling unit information (YES), the process proceeds to step S2016. In this case, since the handling unit information is associated with the package information in the package management unit 314, the reading of the package code is disabled (stopped) in step S2016 to prevent another package from being associated. In step S2016, the package management unit 314 deletes the information in the package information field (a field 40 related to "material" in FIG. 12A) of the read result list screen, and the package information is updated to the package information (the package information obtained in step S2014) associated with the detected handling unit information. Then, the process proceeds to step S2019 of FIG. 10 (step S2019 will be described later).

In step S2015, when the database of the package management unit 314 does not include the handling unit information (NO), the process proceeds to step S2017. In step S2017, the process is branched depending on whether the package management unit 314 has detected the handling unit information from the database in the previous search. The expression "detected in the previous search" used herein represents that the database of the package management unit 314 includes the handling unit code detected previously, in other words, the latest code detected after the camera 280 is activated. When the package management unit 314 has not detected the handling unit information from the database in the previous search (NO), the process proceeds to step S2019 in FIG. 10. When the package management unit 314 has detected the handling unit information from the database in the previous search (YES), the process proceeds to step S2018 (step S2019 will be described later).

In step S2018, the package information on the read result list screen is deleted, and the reading of the package code is continued. Then, the process proceeds to step S2019 in FIG. 10.

In step S2019, the process branches depending on whether information of all of the position, the handling unit, and the package are present on the read result list screen, that is, whether all the position code, the handling unit code, and the package code are read. When the information on the read result list screen is insufficient (NO), the process returns to step S2001, and the above processing is repeated.

By contrast, when all the information is displayed on the read result list screen (YES), that is, when the read result list screen displays the information as illustrated for example, in FIG. 12A, the process proceeds to step S2020. In this case, since all of the position code, the handling unit code, and the package code have been read, the information for managing the package can be transmitted to the server 110. Accordingly, in step S2020, the send button 42 on the read result list screen is activated. In other words, when the information on the read result list screen is insufficient, the send button 42 on the read result list screen illustrated in FIG. 12A is inactive and is, for example, grayed out. Thus, when the information for managing the package is appropriately collected, the information can be transmitted to the server 110.

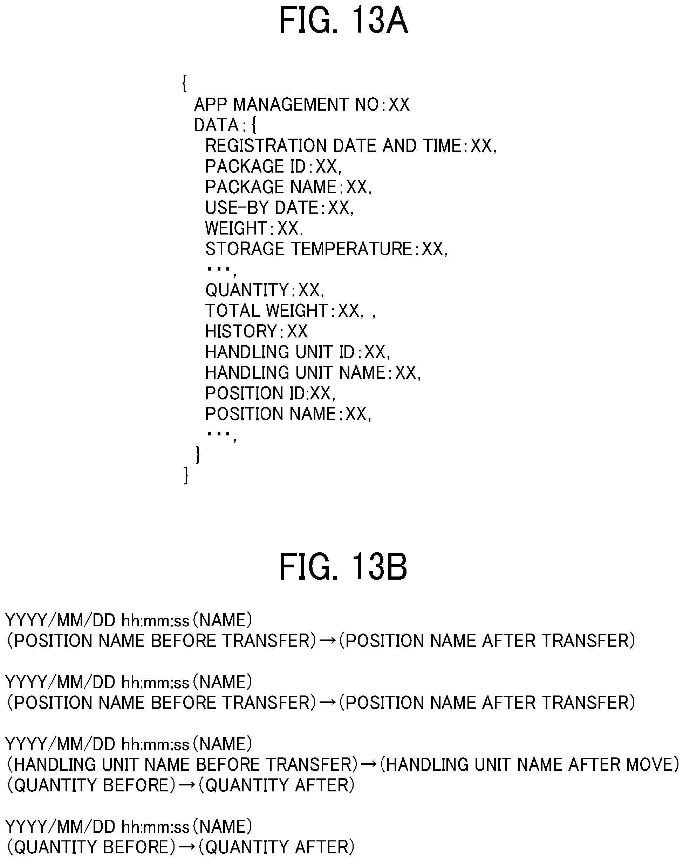

The data transmitted from the terminal device 120 to the server 110 will be described with reference to FIGS. 13A to 13C. FIGS. 13A to 13C are diagrams each illustrating data transmitted in the second example.

FIGS. 13A to 13C are diagrams each illustrating a structure of data transmitted by the terminal device 120. As illustrated in FIGS. 13A to 13C, the transmitted data includes information such as an application management number, a registration date and time, a package ID, a package name, a use-by date, a weight, a storage temperature, a quantity, a total weight, a history, a handling unit ID, a handling unit name, a position ID, and a position name.

The application management number is an identifier indicating which customer the data belongs to. The "application" herein is a software application for managing packages, and the application differs, for example, for each customer. Accordingly, the application management number is an identifier unique to the customer. The application management number is an example of the identifier identifying a customer, but the identifier is not limited thereto. Instead of the application management number, the identifier may be a number for managing the customer or a number for managing a database when one customer uses different databases.

The registration date and time indicate the date and time when the position of the package is registered. The initial value of the date and time of registration is the date and time when the package is newly registered, and the date and time of registration may be updated to the date and time when the information of the package is updated (the date and time when data is transmitted to the server 110).

The package ID and the package name are identified from the read package code. However, when the package code is a one-dimensional code such as a barcode, the package code may not necessarily include the information indicating the package name due to the limitation on the data amount.

The use-by date, weight, and storage temperature are identified from the read package code. However, when the package code is a one-dimensional code such as a barcode, the package code may not necessarily include these pieces of information due to the limitation on the data amount.

The quantity indicates the number of packages when multiple packages are collectively managed. For example, in a situation where there are multiple identical packages with the same use-by date, the user wants to manage these packages together. Then, the user can register and transmit the quantity. When the quantity is registered and managed, the total weight can be registered and managed by multiplying the weight per package by the quantity.

The history is information indicating the updates on, for example, the position and the quantity of the packages. The history information may include, for example, the date and time of the update and the information on the states of the package before and after the update, as illustrated in FIG. 13B. When the package is moved or transferred, the history information may include information on the position names before and after the movement. In addition, when the package is moved between the handling units, the history information can include information on the handling units before and after the movement and information indicating an increase or decrease in the quantity. When clearing the package is performed, the history may include only information on the decreased quantity.

The handling unit ID and the handling unit name are identified from the read handling unit code. When the handling unit code is, for example, a two-dimensional code having a relatively large amount of data, the handling unit code can include other information related to the handling unit. By contrast, when the handling unit code is a one-dimensional code such as a barcode, the handling unit code may not necessarily include the information indicating the handling unit name due to the limitation on the data amount. In this case, the information on the handling unit may be obtained from the server 110 based on the handling unit ID.

The position ID and the position name are identified from the read position code. When the position code is, for example, a two-dimensional code having a relatively large amount of data, the position code can include other information related to the position. By contrast, when the position code is a one-dimensional code such as a barcode, the position code may not necessarily include the information indicating the position name due to the limitation on the data amount. In this case, the information on the position may be obtained from the server 110 based on the position ID.

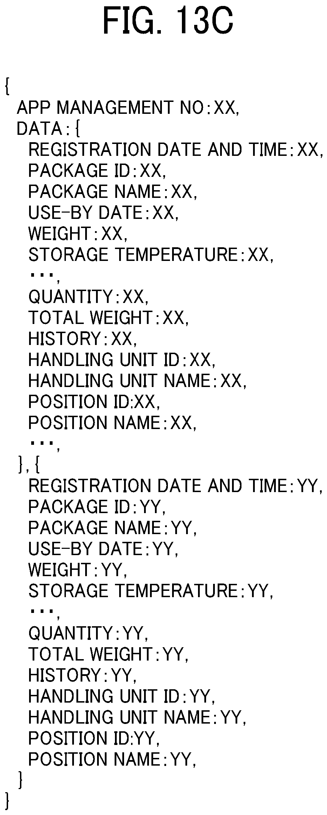

The data illustrated in FIG. 13A can be transmitted to the server 110 for each package. When data on multiple packages are transmitted, the pieces of data in FIG. 13A are defined for each package, and the data is transmitted in the structure, for example, as illustrated in FIG. 13C.

When the data extracted from the read code is transmitted as illustrated in FIGS. 13A to 13C, the load on the communication can be reduced. That is, since it is not necessary to transmit the image data of the code to the management side, the amount of communication is reduced.

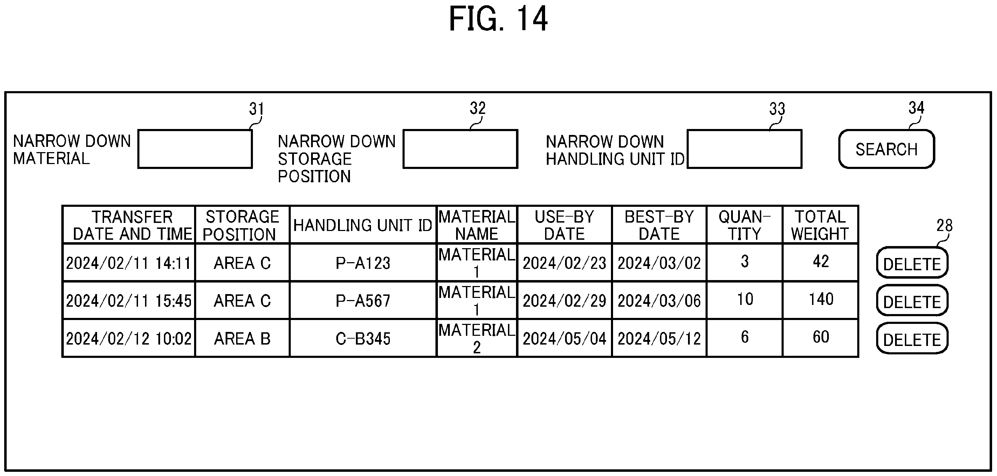

The information processing system 100 can manage the position of the package, particularly, the position of the package accommodated in the handling unit through the processes of FIGS. 10 and 11. Accordingly, by the processes of FIGS. 10 and 11, a screen for confirming the status of the package as illustrated in FIG. 14 can be displayed. FIG. 14 is a diagram illustrating a package information confirmation screen.

The package information confirmation screen can display, for example, as illustrated in FIG. 14, a table in which the date and time of transfer, the storage position, the handling unit ID, the material name, the use-by date, the best-by date, the quantity, and the total weight are associated with each other.

In the package information confirmation screen illustrated in FIG. 14, an alert may be output for a package whose use-by date or best-by date is within a predetermined number of days. An alert may also be output when the environmental conditions such as the temperature and humidity of the storage position deviate from the conditions such as the storage temperature and storage humidity suitable for the material.

When the storage position is a position where clearing is feasible, a "delete" button 28 is displayed. The "delete" button 28 may be displayed only for a person having specific permission. As illustrated in FIG. 14, the package information confirmation screen may include search keyword fields 31, 32, and 33, and the search button 34 to filter the search with, for example, the package (material), the storage position, or the handling unit ID to narrow down the displayed information.

In the second example, the read result list screen may be configured, for example, as illustrated in FIG. 12B. On the read result list screen illustrated in FIG. 12B, the quantity of materials can be changed by a manual operation (for example, inputting a numerical value or selecting a numerical value from a pull-down list). When the quantity is changed, the numerical value in the "increase/decrease" column is also changed in conjunction. The changing of the quantity may be allowed only for a person having specific permission, as in the clearing illustrated in FIG. 12A. When the send button 42 is pressed after the quantity is changed, the information on the changed quantity is transmitted to the server 110, and the package management unit 314 updates the quantity of the package. When the quantity is changed to zero, the package is deleted from the database. Thus, the similar processing to that for the clearing is performed.

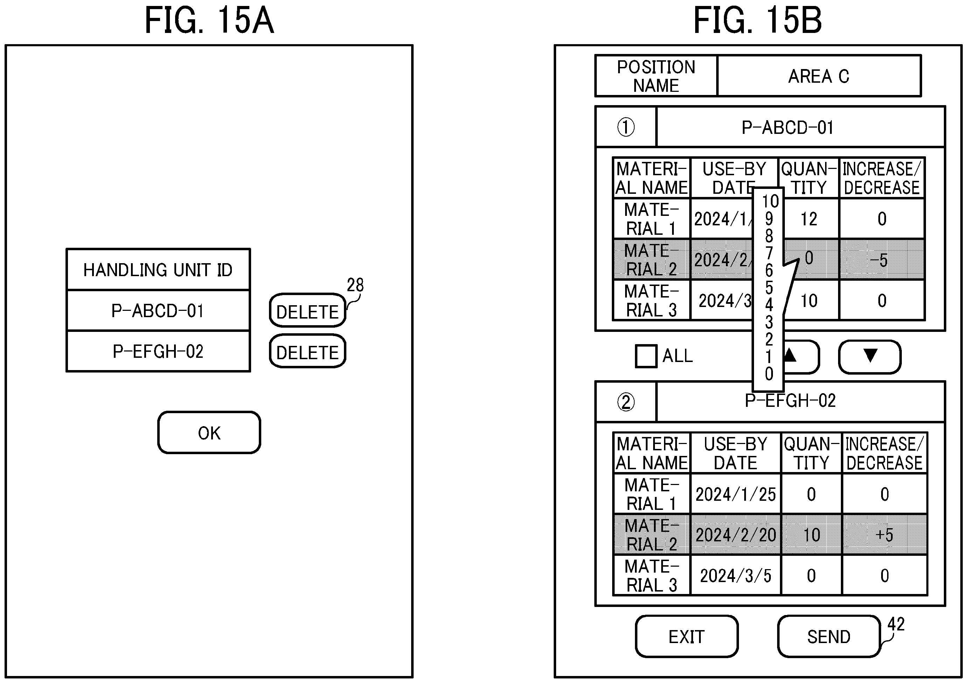

In the second example, a package can be moved between handling units. FIGS. 15A and 15B are diagrams each illustrating a display screen in the second example.

FIG. 15A illustrates a screen for selecting a handling unit to or from which a package is moved. In FIG. 15A, the handling unit with the ID "P-ABCD-01" and the handling unit with the ID "P-EFGH-02" are selected. As illustrated in FIG. 15A, after selecting the handling unit to or from which the package is moved, the screen transitions to the screen of FIG. 15B by pressing the OK button.

FIG. 15B illustrates a screen for moving a package accommodated in a handling unit. It is assumed that the handling unit "P-ABCD-01" initially contains 12 packages of material 1, 5 packages of material 2, and 10 packages of material 3, and the handling unit "P-EFGH-02" contains 5 packages of the material 2. The handling unit "P-EFGH-02" contains no package of the material 1 and no package of the material 3, but the handling unit "P-ABCD-01," which is selected as the handling unit to or from which a package is moved, contains the packages of the material 1 and the packages of the material 3. Accordingly, the material 1 and the material 3 are also displayed in the fields of the handling unit "P-EFGH-02" on the screen illustrated in FIG. 15B. The materials (packages) displayed in the fields of the handling unit "P-EFGH-02" are preferably displayed in the same order as the fields of the handling unit of "P-ABCD-01" (in the order of the materials 1 to 3 from the top).

Initially, the user selects a package (material) to be moved on the screen of FIG. 15B. FIG. 15B illustrates an example in which the material 2 in the handling unit with the ID "P-ABCD-01" is selected. The selected material (packages) is displayed in a different color as illustrated in FIG. 15B. It is preferable that the same package in another handling unit is displayed in a different color with the selection of the package to be moved. That is, in FIG. 15B, the material 2 in the field of the handling unit "P-EFGH-02" is also displayed in a different color with the selection of the material 2 in the handling unit "P-ABCD-01."

The user then enters the quantity to be moved. For example, as illustrated in FIG. 15B, when the package of the material 2 in the handling unit "P-ABCD-01" is pressed, a list for selecting the quantity is displayed. On the displayed list for selecting the quantity, a value is selectable from a range considering the number of packages of the material 2 in the handling unit "P-ABCD-01" and that in the handling unit "P-EFGH-02." For example, in FIG. 15B, since the total number of packages of the material 2 accommodated in the handling unit "P-ABCD-01" and the handling unit "P-EFGH-02" is 10, a list that allows the selection of a numeral from 0 to 10 is displayed. In conjunction with the selection of the numeral from the list, the value of increase/decrease, the number of packages in other handling units, and the value of increase/decrease of packages in other handling units may be changed. For example, in FIG. 15B, five packages of the material 2 are originally contained in the handling unit "P-ABCD-01," but "0" is selected from the list for the material 2. Accordingly, the increase/decrease of the packages of the material 2 in the handling unit "P-ABCD-01" is "-5." Since five packages of the material 2 are moved from the handling unit "P-ABCD-01" to the handling unit "P-EFGH-02" containing the five packages of the material 2, the quantity of the packages of the material 2 in the handling unit "P-EFGH-02" is "10," and the increase/decrease is "+5." The method for inputting the movement of the package is not limited to changing the value of the "quantity" but may be, for example, designating the value of the "increase/decrease."

Further, by checking the check box of "ALL" in FIG. 15B and pressing the move button (the A button or the ▼ button in FIG. 15B), all the packages accommodated in one of the handling units are moved to the other handling unit.

The operation on the screen illustrated in FIGS. 15A and 15B, copes with moving packages between the handling units which is unique to package management using handling units. Thus, the package management is facilitated.

As described above, the information processing system 100 can appropriately manage the package by a simple operation of reading the code.

The information processing system, the information processing apparatus, the information processing method, and a non-transitory recording medium storing the program according to the above-described embodiments of the present disclosure can increase the efficiency of package management.

In one aspect, an information processing apparatus that manages packages includes a terminal device and a server. The terminal device includes a reading unit to read, with a reader, a first code including first identification information identifying a package and a second code including second identification information identifying a position of the package; an extraction unit to extract the first identification information and the second identification information from the first code and the second code, respectively; and a communication unit to transmit the first identification information and the second identification information extracted by the extraction unit to the server. The server includes a first management unit to manage, in a storage device, information on the package identified by the first identification information and information on the position identified by the second identification information in association with each other based on the first identification information and the second identification information.

Each of the functions of the embodiments of the present disclosure can be implemented by a device-executable program written in, for example, C, C++, C#, and JAVA. The program according to an embodiment of the present disclosure can be stored in a device-readable recording medium to be distributed. Examples of the recording medium include a hard disk drive, a compact disk-read-only memory (CD-ROM), a magneto-optical disk (MO), a digital versatile disk (DVD), a flexible disk, an electrically erasable programmable read-only memory (EEPROM), and an erasable programmable read-only memory (EPROM). The program can be transmitted over a network in a form executable with another computer.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general-purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid-state memory device.

Any one of the above-described operations may be performed in various other ways, for example, in an order different from the one described above.

## Claims

1. An information processing system configured to manage packages, the information processing system comprising:
a terminal device (120); and
a server (110), wherein
the terminal device (120) includes:
a reading unit (322) configured to read, with a reader (280), a first code including first identification information identifying a package and a second code including second identification information identifying a position of the package;
an extraction unit (323) configured to extract the first identification information and the second identification information from the first code and the second code, respectively; and
a communication unit (311) configured to transmit the first identification information and the second identification information extracted by the extraction unit (323) to the server (110), and
the server (110) includes a first management unit (314) configured to manage, in a storage device (240), information on the package identified by the first identification information and information on the position identified by the second identification information in association with each other based on the first identification information and the second identification information.

2. The information processing system according to claim 1, further comprising an issuing unit (313) configured to issue codes including the first code and the second code to be read by the reading unit (322).

3. The information processing system according to claim 2,
wherein the issuing unit (313) is configured to issue the second code including an identifier different from an identifier included in the first code.

4. The information processing system according to claim 1, wherein
the reading unit (322) is configured to read, with the reader (280), a third code including third identification information identifying a handling unit that accommodates the package,
the extraction unit (323) is configured to extract the third identification information from the third code,
the communication unit (311) is configured to transmit the third identification information to the server (110), and
the first management unit (314) is configured to manage the information on the package, the information on the position, and information on the handling unit identified by the third identification information in association with each other based on the third identification information.

5. The information processing system according to claim 1, wherein
the first identification information of each of multiple packages to be collectively handled is associated with each other,
the reading unit (322) is configured to read the first code of at least one of the multiple packages, and
the first management unit (314) is configured to collectively manage information on each of the multiple packages based on the read first code.

6. The information processing system according to claim 1,
wherein the server (110) further includes a second management unit (315) configured to manage, in a database in the storage device (240), information on a map indicating a position where the package is placed.

7. The information processing system according to claim 1,
wherein the first management unit (314) is configured to allow clearing, from the storage device (240), of the information on the package being at a predetermined position where the clearing is feasible.

8. A method for managing packages, the method comprising:
reading (S1001), with a reader, a first code including first identification information identifying a package and a second code including second identification information identifying a position of the package;
extracting (S1002) the first identification information and the second identification information from the first code and the second code, respectively; and
managing (S1016), in a storage device (240), information on the package identified by the first identification information and information on the position identified by the second identification information in association with each other based on the first identification information and the second identification information.

9. A carrier medium carrying computer readable codes which, when executed by a computer system, cause the computer system to carry out the method according to claim 8.
